(19) **Europäisches Patentamt / European Patent Office / Office européen des brevets**

(11) **EP 3 642 404 B1**

(12) **EUROPEAN PATENT SPECIFICATION**

(45) Date of publication and mention of the grant of the patent:
**16.02.2022 Bulletin 2022/07**

(21) Application number: **18737762.7**

(22) Date of filing: **14.06.2018**

(51) International Patent Classification (IPC):
**D04H 1/40** *(2012.01)* **D04H 1/46** *(2012.01)*
**D04H 3/105** *(2012.01)* **D04H 5/02** *(2012.01)*
**D04H 5/08** *(2012.01)*

(52) Cooperative Patent Classification (CPC):
**D04H 1/40; D04H 1/46; D04H 3/105; D04H 5/02; D04H 5/08**

(86) International application number:
**PCT/US2018/037433**

(87) International publication number:
**WO 2018/236654 (27.12.2018 Gazette 2018/52)**

(54) **CROSS-LAPPED MULTILAYER FIBROUS BATT AND METHOD OF MAKING THE SAME**

KREUZGELEGTE MEHRSCHICHTIGE FASERMATTE UND VERFAHREN ZUR HERSTELLUNG DAVON

NAPPE FIBREUSE MULTICOUCHE À SUPERPOSITION TRANSVERSALE ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.06.2017 US 201762521934 P**

(43) Date of publication of application:
**29.04.2020 Bulletin 2020/18**

(73) Proprietor: **Lydall, Inc.**
**Manchester, CT 06042 (US)**

(72) Inventor: **JARRARD, Brian Matthew**
**Thurmond, NC 28683 (US)**

(74) Representative: **K2 IP Limited**
**c/o Keltie LLP**
**No.1 London Bridge**
**London SE1 9BA (GB)**

(56) References cited:
**EP-A1- 1 175 524** **GB-A- 1 315 199**
**US-A- 4 514 455** **US-A- 5 454 142**
**US-A- 5 942 452** **US-A1- 2010 081 354**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

FIELD

A cross-lapped multilayered fibrous batt and a method of making the same are generally described. More specifically, a cross-lapped multilayered batt including multiple layers of carded staple fibers and continuous filament fibers is described, where the cross-lapped multilayered batt has enhanced Z-directional strength.

BACKGROUND

Fibrous batts, such as nonwoven batts, nonwoven fabrics, and other fibrous structures or composites generally include individual fibers or threads which are interlaid, but not in an identifiable manner as in a knitted fabric.

Fibrous batts may find use in a wide variety of applications. For example, fibrous batts may be used in the apparel industry for incorporation in military clothing or other types of protective clothing, such as bulletproof vests. They may also be used in other industries, such as, for example, consumer products, construction, packaging, filtration, and automotive/ transportation industry. In at least some of these applications, the fibrous batts must be flexible, yet strong, so that they will be suited for their selected purpose.

In the automotive industry, fibrous batts may be used as reinforcements (primary or secondary) for the floor, roof, and/or side panels of automobiles. In addition, fibrous batts may also be used in automobiles as shields that provide air filtration and acoustical and/or thermal insulation. Such shields may be used, for example, between an object to be protected (e.g., thermally shielded), for example, the outer dash of an automobile, and a high temperature exhaust component such as a catalytic converter or manifold. In some instances, such shields are designed to provide acoustical shielding and/or vibration isolation, and may be placed in the wheel well of an automobile. A single fibrous batt may be used to provide one or more of the aforementioned functions. To do so, it must be flexibly designed to fit the areas to be protected and be resistant to wear and tear.

Various techniques have been employed in an effort to design fibrous batts that are strong, lightweight, and flexible enough for placement in a desired position. For example, EP 1175524 A1 describes a stretch-recoverable nonwoven fabric comprising staple fibers and US 2010/081354 A1 describes a nonwoven multilayered thermal compression moldable fibrous batt having substantially uniform density. However, creating a composite structure having two or more layers that resist delamination has proven challenging, without sacrificing other desirable attributes such as low weight and flexibility. Accordingly, there is a continuing need for a fibrous batt having multiple layers that resist delamination. There is further a need for a fibrous batt having high bending stiffness, and increased tensile and tear strengths, while also being lightweight.

BRIEF DESCRIPTION

A first aspect of the invention relates to a cross-lapped multilayered batt, including at least one a layer of carded fibers (i.e., a carded web or carded web layer) and at least one layer of continuous filament fibers (i.e., a continuous filament fiber layer, as described in claims 1-10. At least some of the fibers and, optionally, at least some of the filaments, extend in a Z direction through a thickness of the batt. The presence of the filaments enhances the Z-directional strength of the batt.

The cross-lapped multilayered batt is formed as a sheet and subsequently molded (mechanically, thermally, or otherwise) to form a semi-rigid or rigid three-dimensional structure.

Another aspect of the present invention relates to a method of making a cross-lapped multilayered batt, as described in claims 11-14. The method includes providing a carded web of staple fibers having a machine direction, and placing a plurality of continuous filament fibers onto a surface of the carded web. The continuous filament fibers may be oriented so that they extend substantially along the machine direction of the carded web, prior to being folded with the carded web. The method further includes folding the carded web and the continuous filament fibers over to form an intermediate web. The intermediate web includes a plurality of layers of the carded web and the continuous filament fibers. The intermediate web may then undergo a needle punching process, so that at least some of the plurality of staple fibers and at least some of the plurality of continuous filament fibers of the plurality of layers are entangled with one another. The entangled staple fibers and the entangled continuous filament fibers extend substantially along a Z direction of the multilayered batt, so that the potential for delamination of the layers is substantially reduced.

Also disclosed herein are methods and materials for providing insulative properties, specifically thermal, vibrational and/or acoustical shielding. Such materials may find particular utility in vehicle and appliance compartments. For example, the materials described herein may include a moldable insulating shield that provides thermal, vibrational and/or acoustical insulation.

BRIEF DESCRIPTION OF THE FIGURES

FIG. IA is a schematic, cross-sectional view of an exemplary cross-lapped multilayered batt, according to one aspect of the disclosure;

FIG. 1B is a schematic, perspective view of a fibrous composite that may be used to form the cross-lapped multilayered batt of FIG. 1A;

FIG. 2A schematically illustrates an exemplary method of making a cross-lapped multilayered batt, according to another aspect of the disclosure;

FIG. 2B is a schematic, top plan view of an exemplary composite that may be used to form a cross-lapped multilayered batt, illustrating an exemplary arrangement of continuous filament yarns, according to another aspect of the disclosure;

FIG. 2C is a schematic, top plan view of another exemplary composite that may be used to form a cross-lapped multilayered batt, illustrating another exemplary arrangement of continuous filament fibers, according to another aspect of the disclosure;

FIG. 2D is a schematic, top plan view of an exemplary composite that may be used to form a cross-lapped multilayered batt, illustrating an exemplary cross-lapping of the composite, according to another aspect of the disclosure; and

FIG. 3 is a flow chart schematically illustrating another exemplary method of making a cross-lapped multilayered batt, according to another aspect of the disclosure.

Various features, aspects, and advantages of the embodiments will become more apparent from the following detailed description, along with the accompanying figures in which like numerals represent like components throughout the figures and text. The various described features are not necessarily drawn to scale, but are drawn to emphasize specific features relevant to some embodiments.

DETAILED DESCRIPTION

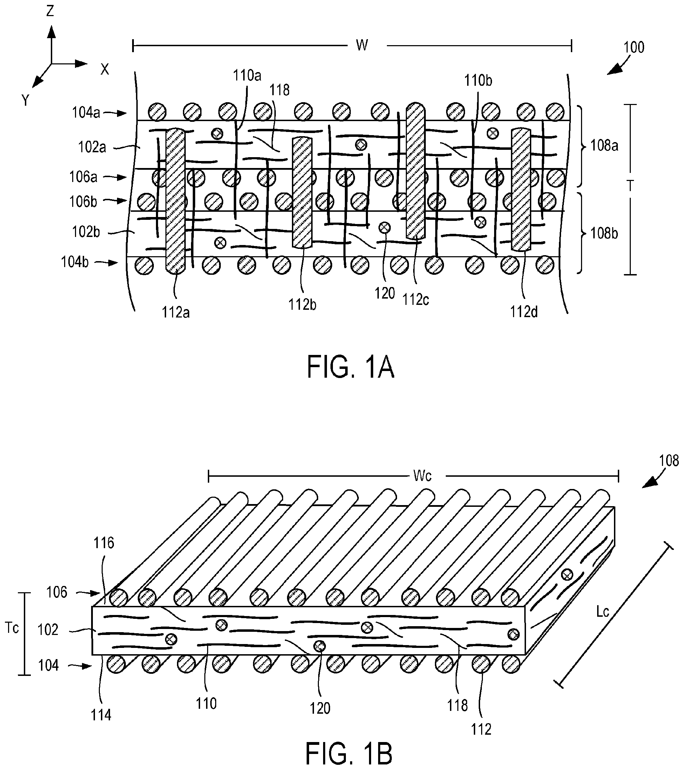

FIG. 1A schematically illustrates an exemplary cross-lapped multilayered batt 100 according to various aspects of the disclosure. Generally described, the cross-lapped multilayered batt 100 may include a plurality of fiber-based (i.e., fibrous) layers that collectively define a sheet-like, multidimensional fibrous structure having a width W, length L (not shown in FIG. 1A; see generally FIG. 1B), and thickness T extending respectively in X, Y and Z directions. More particularly, the cross-lapped multilayered batt 100 includes a plurality of layers of a carded web 102a, 102b (i.e., first and second carded web layers 102a, 102b), and a plurality of layers of continuous filament fibers 104a, 104b, 106a, 106b (i.e., continuous filament fiber layers 104a, 104b, 106a, 106b). The carded web layers 102a, 102b and continuous filament fiber layers 104a, 104b, 106a, 106b may each be in a substantially facing relationship with one or more adjacent layers.

In the illustrated embodiment, the first carded web 102a and the second carded web 102b are spaced apart from one another. Continuous filament fiber layers 106a, 106b are disposed between the first carded web 102a and the second carded web 102b, in an adjacent, facing relationship with one another. Continuous filament fiber layer 104a extends along a surface or side of carded web layer 102a opposite continuous filament fiber layer 106a, and continuous filament fiber layer 104b extends along a surface or side of carded web layer 102b opposite continuous filament fiber layer 106b.

The various carded web layers and continuous filament fiber layers may each at least partially define (and comprise at least a portion of) first and second composite layers 108a, 108b (generally 108) of the cross-lapped multilayered batt 100 (i.e., such that the cross-lapped multilayered batt 100 includes composite layers 108a, 108b). Composite layer 108a includes carded web layer 102a and continuous filament fiber layers 104a, 106a, and composite layer 108b includes carded web layer 102a and continuous filament fiber layers 104b, 106b. The first composite layer 108a and second composite layer 108b are in a facing relationship with one another, such that continuous filament fiber layers 106a, 106b are adjacent to one another and continuous filament fiber layers 104a, 104b are distal one another. However, as will be understood from the following discussion, countless other possibilities are contemplated hereby.

As shown schematically in FIG. IA, at least some fibers (e.g., fibers 110a, 110b) of the carded web layers 102a, 102b may extend at least partially in the Z direction at least partially through the thickness T of the cross-lapped multilayered batt 100. Further, in some embodiments, at least some continuous filament fibers (e.g., fibers 112a, 112b, 112c, 112d) of the continuous filament fiber layers 104a, 104b, 106a, 106b may optionally extend at least partially in the Z direction at least partially through the thickness T of the cross-lapped multilayered batt 100. As will be discussed further below, this Z-directional entanglement of the various fibers and (e.g., the fibers of the carded web layers, and optionally, the continuous filament fiber layers) significantly enhance the overall Z-directional strength of the cross-lapped multilayered batt, as compared to similar structures without such entanglement.

By way of further explanation, FIG. IB schematically illustrates an exemplary fibrous composite 108 (e.g., composite structure or composite batt) that may be used to form the cross-lapped multilayered batt 100 of FIG. IA Specifically, composite 108 or may generally comprise one composite layer (e.g. composite layer 108a, 108b) of the cross-lapped multilayered batt 100, such that FIG. IB represents portions 108a, 108b of FIG. IA in isolation. Accordingly, the following discussion of the various layers and materials with respect to FIG. IB applies to the composite 108, to composite layers 108a, 108b of FIG. IA, and to the various individual component layers of the cross-lapped multilayered batt 100 of FIG. IA, as will be understood by those of skill in the art.

As shown in FIG. IB, the composite108 generally includes a layer of carded fibers 102 (i.e., a carded web or carded web layer) having a pair of opposed sides or surfaces 114, 116 (e.g., a first side or surface 114 and a second side or surface 116). The carded web layer102 may generally be formed from (i.e., may generally comprise) staple fibers 110. The composite108 may further include a first layer (or first plurality of) continuous filament fibers104 (i.e., a continuous filament fiber layer) extending along the first surface 114 of the carded web102, and optionally, a second layer (or second plurality of) continuous filament fibers 106 extending along the second surface 116 of the carded web102.

The composite 108 may generally have a length Le, width We, and thickness Tc. The carded web layer 102 may have a length and width that is generally the same as the length Le and We of the composite 108. The continuous filament fibers 114, 116 may generally have a length that is the same as the length Le of the composite 108. The thickness Tc of the composite 108 may generally be a portion of the thickness T of the multilayered batt 100 (FIG. IA).

The individual continuous filament fibers 112 may be spaced apart from adjacent continuous filament fibers along the width of the carded web102. Thus, although the continuous filament fibers do not form a continuous or unitary layer, the term "layer" is used for simplicity and ease of discussion, and not limitation. Further, it will be noted that while the first surface 114 is shown as being a "lower" surface and the second surface 116 is shown as being an "upper" surface, it will be appreciated that the composite 108 may be reconfigured, as will be discussed below, such that the first surface 114 may be the upper surface and the second surface 116 may be the lower surface. Accordingly, the relative positions of the various layers, surfaces, and other features in the drawings and the accompanying description thereof should not be considered to be limiting in any manner.

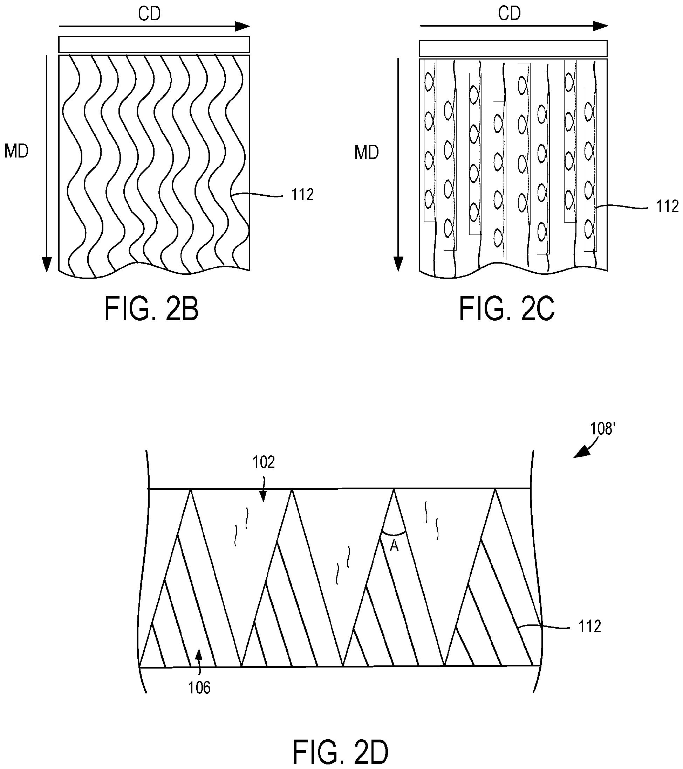

As will be discussed further below, the composite 108 may be cross-lapped (i.e., folded over onto itself) one or more times to form an intermediate web or structure (see, e.g., intermediate web 206, FIG. 2D) having a plurality of layers. In doing so, a layered structure similar to that of FIG. IA may be formed, with carded web layer 102 being folded over to form and define carded web layers 102a, 102b, continuous filament fiber layer 104 being folded over to form and define continuous filament fiber layers 104a, 104b, and continuous filament fiber layer 106 being folded over to form and define continuous filament fiber layers 106a, 106b.

The intermediate structure (not shown) may then be needlepunched to entangle the various fibers and provide Z-directional strength. As a result of the needlepunching process, at least some fibers (e.g., staple fibers 110a, 110b) of at least one carded web layer (e.g.,102a, I 02b) may extend substantially in the Z direction into at least one other layer of the cross-lapped multilayered batt100 and may be mechanically entangled with at least some other staple fibers of another carded web layer (e.g., layer102a,102b), such that the staple fibers can be said to be "needledly disposed" within the respective layer(s). In some instances, the entangled staple fibers may be generally wrapped around and/or intertwined with (not shown) the continuous filament fibers, helping to secure the continuous filament fibers in place and to prevent the various layers from shearing apart and/or delaminating from each other. In addition, the entanglement of fibers enhances the dimensional stability and overall strength of the batt, while imparting some degree of flexibility to the cross-lapped multilayered batt, so that it may be shaped or molded into any desired shaped without falling apart.

Additionally, in some embodiments, depending on the size of the continuous filament fibers and the size of the needles used in the needlepunching process, at least some of the continuous filament fibers (e.g., continuous filament fibers 112a, 112b, 112c, 112d) may also be needlepunched, so that such continuous filament fibers extend generally in the Z direction at least partially into at least one other layer of the cross-lapped multilayered batt. In such a case, the mechanically entangled continuous filament fibers likewise enhance the dimensional stability and strength of the batt, as described above.

The cross-lapped multilayered batt100 may generally include up to100 composite layers (e.g., 108a, 108b,...108n (108n not shown)), for example, about 4 layers to about 60 layers. In some specific embodiments, the cross-lapped multilayered batt may include from about 18 layers to about 40 composite layers, and more particularly, may include from about 12 layers to about 30 composite layers. Accordingly, it will be appreciated that since FIG. IA only shows one folding (i.e., one cross-lapping) of the composite 108 onto itself, FIG. IA should be interpreted as optionally including one or more additional individual and/or composite layers (e.g., 108c, 108d,... 108n) (not shown).

Depending on which direction the composite 108 is cross-lapped (i.e., towards which side 114, 116 the composite 108 is folded) and the arrangement of the layers in the composite 108, the resulting cross-lapped multilayered batt may have various configurations. For example, where the composite108 of FIG. IB is folded onto itself (e.g., cross-lapped in accordance with the present disclosure either towards surface 114 or surface 116), the resulting configuration of layers may generally be [-(CF-CW-CF)-(CF-CW-CF)-]n/2 (where CF refers to continuous filament fiber and CW refers to carded web, and n refers to the number of composite layers).

In another embodiment (not shown), one of the continuous filament fiber layers 104,106 may be omitted, such that the composite batt may only include one layer of continuous filament fibers extending along either the first surface or second surface 114, 116 thereof. In such embodiments, when folded onto itself (e.g., cross-lapped in accordance with the disclosure), the resulting configuration of layers may generally be [-(CF-CW)-(CW-CF)-]n/2 or [-(CW- CF)-(CF-CW)-]n/2 (where CF refers to continuous filament fiber and CW refers to carded web, and n refers to the number of composite layers). In such an instance, it will be appreciated that the resulting structures may be similar, except that in one instance, CF may be on the outside of the cross-lapped multilayered batt, and in the other instance, CW may be on the outside of the cross-lapped multilayered batt, depending on the original configuration of layers, direction of cross-lapping, and number of cross-laps.

In other embodiments, additional layers may be added, omitted, or substituted. Thus, numerous other possible outcomes are contemplated hereby.

The type of composite, degree of cross-lapping, and degree of needlepunching may be varied to achieve a desired cross-lapped multilayered batt, depending on the requirements of the specific end use or application. For example, when the cross-lapped multilayered batt is used as a thermal / acoustical shield, the cross-lapped multilayered batt may be designed to have various physical properties. The desired physical properties of the cross-lapped multilayered batt may be achieved through modifying the basis weight, the tensile strength, the thickness, and/or the flexural modulus / bending of the cross-lapped multilayered batt, based on the needs of the application in which it will be used. For example, the cross-lapped multilayered batt may have a basis weight of from about 300 gsm to about 3,000 gsm, for example, a basis weight of from about 1,200 gsm to about 2,000 gsm. In order to determine the basis weight of an embodiment of the cross-lapped multilayered batt, samples may be tested per industry standard ASTM D3776. The samples are cut in the shape of either squares or circles, with an area of 26cm$^2$ (4in$^2$). The samples may be conditioned at temperatures of about 25°C (70°F), and each sample is weighed at the conditioned temperature on a scale having a capacity and sensitivity within +/- 0.1% of the mass of the sample. The mass per unit area of each sample is then calculated using:

$$g/m^2 = 10^6 G/LsW \text{ (Formula 1)}$$

where G is the mass of the specimen, Ls is the length of the specimen, and Wis the weight of the specimen.

The cross-lapped multilayered batt may generally have a tensile strength of up to about 1,750 N/cm. To determine the tensile strength of the cross-lapped multilayered batt, samples of the batt may be tested in accordance with ASTM D5034. For example, the samples may be cut to 100 mm x 150 mm. The shortest side of each sample is centrally mounted in clamps provided in a tensile tester machine (such as those available under the trade name Instron). A force is applied to each sample until the sample ruptures. The average forces required for elongation and breakage of the samples provide the average tensile strength. In addition, the layers of the cross-lapped multilayered batt may be selected so that the cross-lapped multilayered batt has any desired thickness, such as, for example, a thickness of from about 2 mm to about 5 mm. The determination of the thickness of the cross-lapped multilayered batt may be made according to ASTM D5729. Samples of the cross-lapped multilayered batt may be placed on an anvil or other testing apparatus, such as a caliper, and a measurement of their thickness is taken. If several samples are tested, the average thickness of the samples is used.

The cross-lapped multilayered batt may generally have a flexural modulus of up to about 1,350 MPa at a weight of 2,000 gsm. The flexural modulus may be determined by testing samples of the cross-lapped multilayered batt in accordance with ISO 178. The samples are cut to 10 mm x 80 mm, at a thickness of 4 mm, and each sample is subjected to a three-point loading system. Each sample is supported at each of its ends, and a beam is used to displace/deflect a midpoint of the sample at a constant rate, until the sample fractures or deforms at a predetermined value. The cross-lapped multilayered batt may be designed to have various flexural modulus values, based on the needs of the application for which the batt is being designed.

Various materials may be used to form a cross-lapped multilayered batt (e.g., batt 100) according to the disclosure, and such materials may be selected to achieve and/or enhance the desired characteristics of the resulting cross-lapped multilayered batt. For example, as stated above, the carded web (e.g., carded web 102, 102a, 102b) may generally be formed from (i.e., comprise) a plurality of staple fibers (e.g., fibers 110, 110a, 110b). The fibers may be random staple fibers and/or oriented staple fibers. The staple fibers may be formed from (i.e., comprise) any natural or synthetic material, for example, fiberglass, a polyolefin, a polyamide, an aramid, cotton, flax, jute, or any combination thereof. The staple fibers utilized may be selected based on their cost-effectiveness, as well as individual properties of the materials used to form the staple fibers, such as flammability resistance and recyclability, and the application in which the cross-lapped multilayered batt will be used.

The staple fibers may have any suitable dimensions. Additionally, staple fibers having varying dimensions may be used. In some examples, the staple fibers may have a diameter of from about 6 microns to about 250 microns, for example, from about, 10 microns to about 100 microns. The staple fibers may have a length of from about 4 cm (1.5 inches) to about 13 cm (5.0 inches), for example, about 12.5 cm (4.5 inches) long. However, countless other possibilities are contemplated.

The carded web may have a basis weight of from about 15 gsm to about 120 gsm, for example, from about 40 gsm to about 70 gsm. However, various other basis weights may be suitable, based on the needs of the particular application.

The continuous filament fibers (e.g., continuous filament fibers 104, 104a, 104b, 106, 106a, 106b) may generally comprise individual filaments (i.e., or single or mono-filaments), multi-filaments, or core-spun yarn. In one example, the core-spun yarn may include staple fibers wrapped around either a mono-filament or multi-filament fiber. The continuous filament fibers may be formed from (i.e., comprise) any suitable high-strength material having high bending stiffness and high modulus. In some embodiments, may be formed from the same material(s) as the staple fibers of the carded web layer(s). Alternatively, one or more continuous filament fiber layers may be formed from different materials than the staple fibers of one or more of the carded web layer(s). For example, the continuous filament fibers may be formed from fiberglass, a paramid, a polyester, a nylon, a polybenzimidazole, a polyolefin, or any combination thereof. In some embodiments, the continuous filament fibers may include metallic filaments, such as, for example, stainless steel, brass, and copper, which may help to promote electrostatic discharge, enhance abrasion resistance, and increase the thermal resistance of the cross-lapped multilayered batt.

The continuous filament fibers may have any suitable dimensions. Additionally, continuous filament fibers having varying dimensions may be used. For example, the continuous filament fibers may have a diameter of from about 6 microns to about 1,000 microns, for example, from about 6 microns to about 22 microns.

The relative amounts of staple fibers and continuous filament fibers may vary for each application. For example, in some embodiments, the staple fibers may be present in the cross-lapped multilayered batt in an amount of up to about 75% of a total mass of the batt, for example, from about 15% to about 50% of the total mass of the batt, for example, from about 30% to about 40% of the total mass of the batt. The number of continuous filament yarns in the batt may be about 1 to about 50 ends per inch, for example, from about 10 to about 20 ends per inch, wherein 1 inch is equivalent to 2.54cm. As used herein, each continuous filament yarn represents a bundle of continuous filaments.

If desired, the cross-lapped multilayered batt 100 may include a plurality of binder fibers 118 (FIGS. IA and IB) dispersed or comingled with the staple fibers 110 of the carded web layer(s) (e.g., layers 102, 102a, 102b). The binder fibers may generally serve to join or bond at least some of the staple fibers to one another within the carded web layers. The binder fibers may also generally serve to join or bond at least some of the staple fibers to the continuous filament fibers. As with the fibers of the carded web layers (and in some instances, the continuous filament fibers), the binder fibers may be needledly disposed (not shown) through the thickness T and the Z direction of the batt.

The binder fibers may be formed from any synthetic or organic material having a melting temperature of less than about 21 5°C. Examples of fibers that may be suitable as binder fibers include, but are not limited to, polyester fibers, nylon fibers, olefin fibers, cellulose acetate fibers, or any combination thereof. The binder fibers may have a length between about 5 cm (2 inches) and 13 cm (5 inches).

Additionally, or alternatively, the cross-lapped multilayered batt 100 may include a powder adhesive 120 (FIGS. IA and IB). The powder adhesive may be operative for adhering at least some of the staple fibers and continuous filament fibers to each other within their respective layers and/or adjacent layers of the multilayered batt. In some embodiments, the powder adhesive and/or the binder fibers may be uniformly interspersed within each layer of the batt. Alternatively, the powder adhesive may be disposed more specifically with one or more layers of carded web.

The present disclosure is further related to a method 200 of forming a cross-lapped multilayered batt 100. The cross-lapped multilayered batt may include carded web layers and continuous filament fiber layers, such as those as described in connection with FIGS. IA and IB. Accordingly, since various examples of materials that may be suitable for forming such layers, various properties thereof, and various cross-lapped multilayered batts formed therefrom are described in detail above, such details are not repeated here for the sake of brevity.

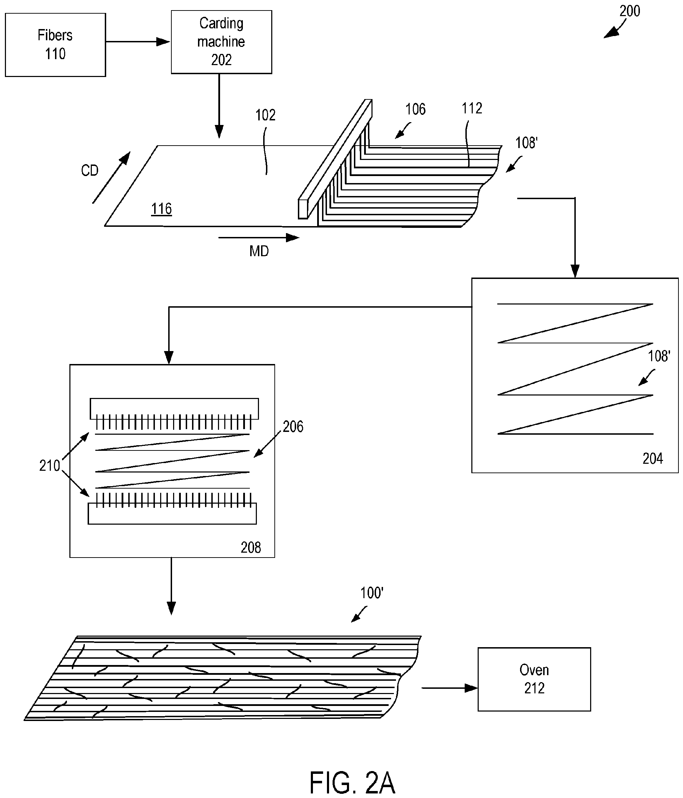

As illustrated in FIG. 2A, a plurality of staple fibers 110 may be used to form a carded web 102 using a carding machine 202. As understood by those of skill in the art, the carding machine 202 intertwines the staple fibers 110 with one another so that the carded web 202 is a substantially continuous sheet. The carded web 102 can be understood to have a machine direction MD, which refers to the direction of the carded web as it exits the carding machine, and a cross-machine direction CD, which refers to a direction extending crosswise to the machine direction.

A layer of continuous filament fibers 106 may be laid onto a surface 116 of the carded web 102 to form a fibrous composite structure (i.e., a carded web/ continuous filament fiber composite) 108' (similar to composite 108, except that continuous filament fiber layer 104 is omitted; where layer 104 is desired, e.g., a layer of continuous filament fibers may be deposited onto the forming belt or wire, and the carded web may be formed on the layer of continuous filament fibers). As shown in FIG. 2A, the individual continuous filament fibers 112 are oriented so that they extend substantially along the machine direction MD of the carded web, and are spaced apart from one another along the cross-machine direction CD of the carded web 102.

It will be noted that, in the exemplary process shown in FIG. 2A, the continuous filament fibers are laid onto the "upper" surface 116 of the carded web (i.e., the uppermost surface as shown in the figure). However, in other embodiments, the continuous filament fibers may be positioned along the opposite surface (i.e., the "lower" surface of the carded web), or along both surfaces, as discussed previously in connection with FIGS. IA and IB.

Additionally, in the illustrated example, the continuous filament fibers 112 are positioned so that they are arranged in a substantially linear (i.e., straight) configuration or pattern extending along the length (i.e., machine direction) of the carded web 102. However, the continuous filament fibers may have any suitable configuration. For example, the continuous filament fibers 112 may be configured to have a wave-like configuration or pattern (FIG. 2B), a looped configuration or pattern (FIG. 2C), or any other configuration or pattern, as desired. As will be understood by one of ordinary skill in the art, the continuous filament fibers may be unwound onto the surface(s) of the carded web at a speed that impacts the type of pattern the continuous filament fibers form as they are arranged onto the upper and/or lower surface of the carded web. The resulting pattern or configuration may have an effect on the resulting cross-lapped multilayered batt. For example, a wave-like configuration or pattern (FIG. 2B) or a looped configuration or pattern (FIG. 2C) may impart a degree of flexibility or stretchability to the resulting cross-lapped multilayer batt, which may be desirable for some applications.

Returning to FIG. 2A, the carded web / continuous filament fiber composite 108' may then be cross-lapped in a cross-lapper 204 one or more times to form an intermediate web 206 having a plurality of composite layers. As stated above, any number of composite layers may be used to form the batt 100. Adjustment of the carriage speed impacts the number of layers of carded web and continuous filament fibers that are generated, with a higher carriage speed resulting in a greater number of layers and a thicker batt, and a lower carriage speed resulting in a fewer number of layers and a thinner batt. Generally speaking, the resulting configuration of layers may generally be [-(CF-CW)-(CW-CF)-]n/2 or [-(CW-CF)-(CF-CW)-]n/2 (where CF refers to continuous filament fiber and CW refers to carded web, and n refers to the number of composite layers), depending on which way the intermediate web is folded, the number of folds, and so on, as discussed above. The placement of the continuous filament fibers onto the carded web, as described hereinabove, reduces risk of damage to the carding machine, while imparting desirable properties to the cross-lapped multilayered batt.

As illustrated in FIG. 2D, the folding of the carded web / continuous filament fiber composite 108' creates a folding angle A measured between each folded layer. The folding angle A refers to the orientation of the folded layers as they are laid down when they exit, for instance, the cross-lapper 204. The folding angle A may be related to the carriage speed of the cross-lapper. For instance, the folding angle A may be increased by decreasing the carriage speed of the cross-lapper, while the folding angle A may be decreased by increasing the carriage speed of the cross-lapper. In some examples, the folding angle A may be from about 1 degree to about 45 degrees, for example, from about 3 degrees to about IO degrees.

However, other folding angles and ranges thereof are contemplated.

The intermediate web 206 may then be needlepunched 208 to form the cross-lapped multilayered batt100'. The needling action of barbed needles 210 entangles at least some of the staple fibers 110, and optionally, some of the entangled continuous filament fibers 112 of the intermediate web 206, so that they extend substantially along a Z direction (FIG. IA) of the multilayered batt. As the barbed needles are inserted and removed from the intermediate web, the needles push the staple fibers, and in some instances, the continuous filament fibers, throughout the thickness of the batt. This reorients the fibers so that they are entangled with other fibers in other layers of the intermediate web, thereby helping to secure each layer together in a manner that prevents shearing of the layers of the formed batt. In the illustrated process, the intermediate web 206 is needled from above and below, such that both sides or surfaces of the intermediate web are contacted with the needles. However, in other embodiments, the intermediate web may be needled from only one side (either from above or below). The resulting cross-lapped multilayered batt 100' may generally resemble the cross-lapped multilayered batt 100 of FIG. IA, except that layers 106a, 106b would be omitted, and additional composite layers 108c, 108d... etc. may be provided. The type and size of the barbed needles selected may be based on the diameter of the staple fibers and the continuous filament fibers to achieve the desired result.

If desired, where binder fibers (e.g., binder fibers 118, FIGS. IA and IB) and/or adhesive powder (e.g., adhesive powder 120, FIGS. IA and IB) are used, the cross-lapped multilayered batt may be additionally bonded by running the cross-lapped multilayered batt through an oven 212 set at a desired temperature that is substantially the same or higher than the melting temperature of the binder fibers and/or adhesive powder, so that the binder fibers and/or adhesive powder can melt and laminate each of the layers together.

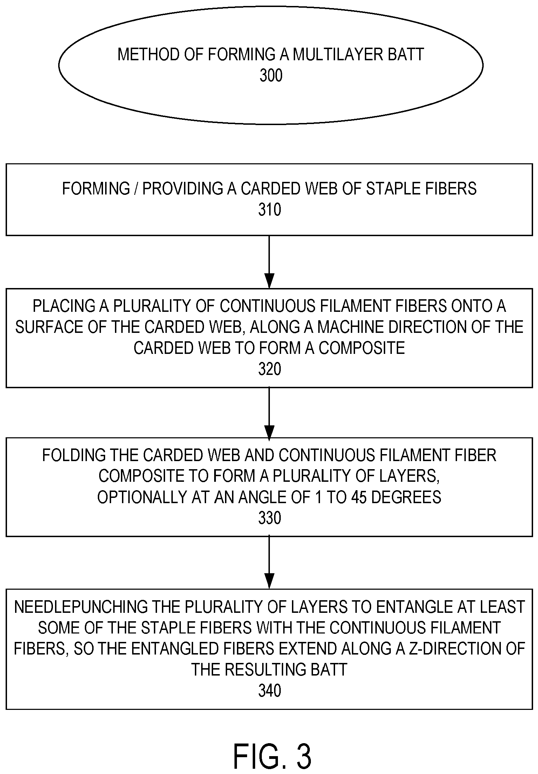

The above method may further be described as a series of stages or steps in connection with FIG. 3. It will be appreciated that certain stages or steps may be added, optional, modified, or omitted, and that the stages or steps presented therein should not be considered limiting in any manner. Moreover, even though the method is illustrated as a series of stages or steps, it will be understood that such stages may be part of a unitary process or separate processes, each of which may be batch or continuous.

Turning now to FIG. 3, an exemplary method 300 of forming a multilayered batt (such as the various batts described above) may include forming or providing 310 a carded web of staple fibers, placing 320 a plurality of continuous filament fibers onto a surface of the carded web (to form a fibrous composite, e.g., such as composite 108, 108' above), such that the continuous filament fibers extend along a machine direction of the carded web, folding 330 the carded web and the continuous filament fiber composite (e.g., using a cross-lapper) to form an intermediate web including a plurality of layers, where the carded web and the continuous filament fiber composite may optionally be folded at an angle of about 1 degree to about 45 degrees, and needlepunching 340 the plurality of layers to entangle at least some of the staple fibers with the continuous filament fibers, so that they extend along a Z direction (i.e., thickness) of the batt. Alternatively or additionally, the method may include positioning the continuous filament fibers along the machine direction of the forming wire/ belt, and depositing the staple fibers of the carded web onto the continuous filament fibers, to form the fibrous composite. The resulting batt exhibits Z-directional strength, as discussed above in connection with the various other embodiments.

The components of the apparatus illustrated are not limited to the specific embodiments described herein, but rather, features illustrated or described as part of one embodiment can be used on or in conjunction with other embodiments to yield yet a further embodiment. It is intended that the apparatus include such modifications and variations. Further, steps described in the method may be utilized independently and separately from other steps described herein.

**Claims**

1. A cross-lapped multilayered batt (100) comprising:

   one or more layers of a carded web (102) of staple fibers (110); and
   one or more continuous filament fiber layers (104, 106) comprising a plurality of continuous filament fibers (112), wherein

   each layer of the multilayered batt comprises the one or more layers of the carded web and the continuous filament fiber layers
   the multilayered batt comprises an X direction along a width (Wc) of the batt, a Y direction along a length (Lc) of the multilayered batt, and a Z direction extending through a thickness (Tc) of the multilayered batt, wherein at least some staple fibers of at least one layer of the carded web are mechanically entangled with at least some other staple fibers of another layer of carded web, such that the mechanically entangled staple fibers extend along the Z direction of the multilayered batt, thereby enhancing a Z-directional strength of the multilayered batt, and
   the multilayered batt is dimensioned and molded to form and maintain a shape.

2. The multilayered batt of claim 1, wherein at least some staple fibers of the at least one layer of the carded web are mechanically entangled with at least some continuous filament fibers, such that each of the mechanically entangled staple fibers and the mechanically entangled continuous filament fibers extend along the Z direction of the multilayered batt.

3. The multilayered batt of claim 1, wherein the one or more layers of carded web comprises a first carded web (102a) and a second carded web (102b) in a layered, facing relationship with one another, and wherein the continuous filament fiber layer is disposed between the first carded web and the second carded web.

4. The multilayered batt of claim 1, wherein the multilayered batt is molded to form a thermal-acoustical shield.

5. The multilayered batt of claim 1, wherein the carded web comprises at least one of fiberglass, polyolefin, polyamide, aramid, cotton, flax, and jute.

6. The multilayered batt of claim 1, wherein the staple fibers are present in about up to 75% of a total mass of the batt.

7. The multilayered batt of claim 1, wherein the staple fibers comprise at least one of random staple fibers and oriented staple fibers.

8. The multilayered batt of claim 1, wherein the carded web comprises a plurality of binder fibers having a melting temperature of less than about 21 5°C, wherein the binder fibers connect at least some of the staple fibers to other staple fibers within each layer of the carded web.

9. The multilayered batt of claim 1, wherein the continuous filament fibers comprise at least one of fiberglass, para-mid, polyester, nylon, polybenzimidazole, and polyolefin.

10. The multilayered batt of claim 1, wherein each layer of the one or more layers of the carded web is formed from a continuous carded web, the continuous carded web being folded onto itself to form each layer of the carded web.

11. A method of forming a multilayered batt, the method comprising: forming a fibrous composite, the fibrous composite comprising

    a carded web of staple fibers, the carded web having a machine direction (MD), and
    a plurality of continuous filament fibers positioned along a surface (116) of the carded web, the continuous filament fibers being oriented so that the continuous filament fibers extend substantially along the machine direction of the carded web;

folding the fibrous composite onto itself using a cross-lapper (204) to form an intermediate web (206) including a plurality of fibrous composite layers; and

needlepunching the plurality of fibrous composite layers, so that at least some of the plurality of staple fibers and at least some of the plurality of continuous filament fibers of the fibrous composite layers are entangled with one another, and so that at least some of the entangled staple fibers and the entangled continuous filament fibers extend substantially along a Z direction of the multilayered batt; and

molding the multilayered batt to form and maintain a shape.

12. The method of claim 11, wherein the surface of the carded web includes an upper surface and a lower surface, and wherein at least some of the plurality of continuous fibers are positioned along the upper surface of the carded web and at least some other of the plurality of continuous filament fibers are positioned along the lower surface of the carded web.

13. The method of claim 11, wherein the step of folding comprises folding the fibrous composite at a folding angle (A) of from about 1 degree to about 45 degrees.

14. The method of claim 11, wherein at least some of the continuous filament fibers are positioned in a linear pattern, a looped pattern, or a continuous wave-like pattern along the surface of the carded web.


**Patentansprüche**

1. Eine kreuzgelegte mehrschichtige Matte (100), die Folgendes umfasst:

eine oder mehrere Lagen eines kardierten Gewebes (102) aus Stapelfasern (110); und
eine oder mehrere Endlosfilamentfaserlagen (104, 106), die eine Vielzahl von Endlosfilamentfasern (112) umfassen, wobei
jede Lage der mehrschichtigen Matte die eine oder die mehreren Lagen des kardierten Gewebes und der Endlosfilamentfaserlagen umfasst, die mehrschichtige Matte eine X-Richtung entlang einer Breite (Wc) der Matte, eine Y-Richtung entlang einer Länge (Lc) der mehrschichtigen Matte und eine Z-Richtung, die sich durch eine Dicke (Tc) der mehrschichtigen Matte erstreckt, umfasst, wobei mindestens einige Stapelfasern von mindestens einer Lage des kardierten Gewebes mit mindestens einigen anderen Stapelfasern einer anderen Lage kardierten Gewebes mechanisch verwickelt sind, sodass sich die mechanisch verwickelten Stapelfasern entlang der Z-Richtung der mehrschichtigen Matte erstrecken, wodurch eine Z-direktionale Festigkeit der mehrschichtigen Matte gesteigert wird, und

die mehrschichtigen Matte dimensioniert und geformt ist, um eine Form herzustellen und aufrechtzuerhalten.

2. Mehrschichtige Matte nach Anspruch 1, wobei mindestens einige Stapelfasern der mindestens einen Lage des kardierten Gewebes mit mindestens einigen Endlosfilamentfasern mechanisch verwickelt sind, sodass sich die mechanisch verwickelten Stapelfasern und die mechanisch verwickelten Endlosfilamentfasern entlang der Z-Richtung der mehrschichtigen Matte erstrecken.

3. Mehrschichtige Matte nach Anspruch 1, wobei die eine oder die mehreren Lagen kardierten Gewebes ein erstes kardiertes Gewebe (102a) und ein zweites kardiertes Gewebe (102b) in einer geschichteten, einander zugekehrten Beziehung umfassen, und wobei die Endlosfilamentfaserlage zwischen dem ersten kardierten Gewebe und dem zweiten kardierten Gewebe angeordnet ist.

4. Mehrschichtige Matte nach Anspruch 1, wobei die mehrschichtigen Matte geformt ist, um eine thermisch-akustische Abschirmung herzustellen.

5. Mehrschichtige Matte nach Anspruch 1, wobei das kardierte Gewebe mindestens eines aus Glasfaser, Polyolefin, Polyamid, Aramid, Baumwolle, Flachs und Jute umfasst.

6. Mehrschichtige Matte nach Anspruch 1, wobei die Stapelfasern in etwa bis zu 75 % einer Gesamtmasse der Matte präsent sind.

7. Mehrschichtige Matte nach Anspruch 1, wobei die Stapelfasern mindestens eines von ungerichteten Stapelfasern und orientierten Stapelfasern umfassen.

8. Mehrschichtige Matte nach Anspruch 1, wobei das kardierte Gewebe eine Vielzahl von Bindefasern umfasst, die eine Schmelztemperatur von weniger als etwa 21 5 °C aufweisen, wobei die Bindefasern mindestens einige der Stapelfasern mit anderen Stapelfasern innerhalb jeder Lage des kardierten Gewebes verbinden.

9. Mehrschichtige Matte nach Anspruch 1, wobei die Endlosfilamentfasern mindestens eines von Glasfaser, Paramid, Polyester, Nylon, Polybenzimidazol und Polyolefin umfassen.

10. Mehrschichtige Matte nach Anspruch 1, wobei jede Lage der einen oder der mehreren Lagen des kardierten Gewebes aus einem kardierten Endlosgewebe hergestellt wird, wobei das kardierte Endlosgewebe auf sich selbst gefaltet wird, um jede Lage des kardierten Gewebes herzustellen.

11. Ein Verfahren zum Herstellen einer mehrschichtigen Matte, wobei das Verfahren Folgendes umfasst: Herstellen eines Faserverbundstoffs, wobei der Faserverbundstoff Folgendes umfasst:

> ein kardiertes Gewebe aus Stapelfasern, wobei das kardierte Gewebe eine Maschinenrichtung (MD) aufweist, und
> eine Vielzahl von Endlosfilamentfasern, die entlang einer Oberfläche (116) des kardierten Gewebes positioniert sind, wobei die Endlosfilamentfasern so orientiert werden, dass sich die Endlosfilamentfasern im Wesentlichen entlang der Maschinenrichtung des kardierten Gewebes erstrecken;
> Falten des Faserverbundstoffs auf sich selbst unter Verwendung eines Kreuzlegers (204), um ein Zwischengewebe (206) herzustellen, das eine Vielzahl von
> Nadelfilzen der Vielzahl von Faserverbundstofflagen, sodass mindestens einige der Vielzahl von Stapelfasern und mindestens einige der Vielzahl von Endlosfilamentfasern der Faserverbundstofflagen miteinander verwickelt sind, und sodass sich mindestens einige der verwickelten Stapelfasern und der verwickelten Endlosfilamentfasern im Wesentlichen entlang einer Z-Richtung der mehrschichtigen Matte erstrecken; und
> Formen der mehrschichtigen Matte, um eine Form herzustellen und aufrechtzuerhalten.

12. Verfahren nach Anspruch 11, wobei die Oberfläche des kardierten Gewebes eine obere Oberfläche und eine untere Oberfläche einschließt, und wobei mindestens einige der Vielzahl von Endlosfilamentfasern entlang der oberen Oberfläche des kardierten Gewebes positioniert sind und mindestens einige andere der Vielzahl von Endlosfilamentfasern entlang der unteren Oberfläche des kardierten Gewebes positioniert sind.

13. Verfahren nach Anspruch 11, wobei der Schritt des Faltens das Falten des Faserverbundstoffs mit einem Faltwinkel (A) von etwa 1 Grad bis etwa 45 Grad umfasst.

14. Verfahren nach Anspruch 11, wobei mindestens einige der Endlosfilamentfasern in einem linearen Muster, einem Schleifenmuster oder einem endloswellenartigen Muster entlang der Oberfläche des kardierten Gewebes positioniert sind.

## Revendications

1. Une nappe multicouche à superposition transversale (100) comprenant :

> une ou plusieurs couches d'une bande cardée (102) de fibres discontinues (110), et
> une ou plusieurs couches de fibres à filament continu (104, 106) comprenant une pluralité de fibres à filament continu (112), où
> chaque couche de la nappe multicouche comprend les une ou plusieurs couches de la bande cardée et les couches de fibres à filament continu,
> la nappe multicouche comprend une direction X le long d'une largeur (Wc) de la nappe, une direction Y le long d'une longueur (Lc) de la nappe multicouche et une direction Z s'étendant au travers d'une épaisseur (Tc) de la nappe multicouche, où au moins certaines fibres discontinues d'au moins une couche de la bande cardée sont mécaniquement enchevêtrées avec au moins certaines autres fibres discontinues d'une autre couche de la bande cardée, de sorte que les fibres discontinues mécaniquement enchevêtrées s'étendent le long de la direction Z de la nappe multicouche, améliorant ainsi une résistance directionnelle Z de la nappe multicouche, et
> la nappe multicouche est dimensionnée et moulée de façon à former et conserver une forme.

2. La nappe multicouche selon la Revendication 1, où au moins certaines fibres discontinues de la au moins une couche de la bande cardée sont mécaniquement enchevêtrées avec au moins certaines fibres à filament continu, de sorte que chacune des fibres discontinues mécaniquement enchevêtrées et des fibres à filament continu mécaniquement enchevêtrées s'étende le long de la direction Z de la nappe multicouche.

3. La nappe multicouche selon la Revendication 1, où les une ou plusieurs couches de bande cardée comprennent une première bande cardée (102a) et une deuxième bande cardée (102b) dans une relation en face à face en couches l'une avec autre, et où la couche de fibres à filament continu est disposée entre la première bande cardée et la deuxième bande cardée.

4. La nappe multicouche selon la Revendication 1, où la nappe multicouche est moulée de façon à former un blindage thermo-acoustique.

5. La nappe multicouche selon la Revendication 1, où la bande cardée comprend au moins un élément parmi fibre de verre, polyoléfine, polyamide, aramide, coton, lin et jute.

6. La nappe multicouche selon la Revendication 1, où les fibres discontinues sont présentes dans environ jusqu'à 75% d'une masse totale de la nappe.

7. La nappe multicouche selon la Revendication 1, où les fibres discontinues comprennent au moins des fibres parmi des fibres discontinues aléatoires et des fibres discontinues orientées.

8. La nappe multicouche selon la Revendication 1, où la bande cardée comprend une pluralité de fibres de liage possédant une température de fusion inférieure à environ 21 5°C, où les fibres de liage relient au moins certaines des fibres discontinues à d'autres fibres discontinues à l'intérieur de chaque couche de la bande cardée.

9. La nappe multicouche selon la Revendication 1, où les fibres à filament continu comprennent au moins un élément parmi fibre de verre, paramide, polyester, nylon, polybenzimidazole et polyoléfine.

10. La nappe multicouche selon la Revendication 1, où chaque couche des une ou plusieurs couches de la bande cardée est formée à partir d'une bande cardée continue, la bande cardée continue étant repliée sur elle-même de façon à former chaque couche de la bande cardée.

11. Un procédé de formation d'une nappe multicouche, le procédé comprenant : la formation d'un composite fibreux, le composite fibreux comprenant

une bande cardée de fibres discontinues, la bande cardée possédant une direction machine (MD), et
une pluralité de fibres à filament continu positionnées le long d'une surface (116) de la bande cardée, les fibres à filament continu étant orientées de sorte que les fibres à filament continu s'étendent sensiblement le long de la direction machine de la bande cardée,
le pliage du composite fibreux sur lui-même au moyen d'une nappeuse transversale (204) de façon à former une bande intermédiaire (206) comprenant une pluralité de couches de composite fibreux, et
l'aiguilletage de la pluralité de couches de composite fibreux, de sorte qu'au moins certaines fibres de la pluralité de fibres discontinues et au moins certaines fibres de la pluralité de fibres à filament continu des couches de composite fibreux soient enchevêtrées les unes avec les autres, et de sorte qu'au moins certaines fibres des fibres discontinues enchevêtrées et les fibres à filament continu enchevêtrées s'étendent sensiblement le long d'une direction Z de la nappe multicouche, et
le moulage de la nappe multicouche de façon à former et conserver une forme.

12. Le procédé selon la Revendication 11, où la surface de la bande cardée comprend une surface supérieure et une surface inférieure, et où au moins certaines fibres de la pluralité de fibres continues sont positionnées le long de la surface supérieure de la bande cardée et au moins certaines autres fibres de la pluralité de fibres à filament continu sont positionnées le long de la surface inférieure de la bande cardée.

13. Le procédé selon la Revendication 11, où l'opération de pliage comprend le pliage du composite fibreux à un angle de pliage (A) allant d'environ 1 degré à environ 45 degrés.

14. Le procédé selon la Revendication 11, où au moins certaines des fibres à filament continu sont positionnées selon un motif linéaire, un motif en boucle ou un motif en forme d'onde continue le long de la surface de la bande cardée.

W

Z

X

Y

110a
118
110b

104a →
102a
106a →
106b →
102b
104b →

108a
T
108b

112a
112b
120
112c
112d

## FIG. 1A

100

Wc

108

116
106 →
102 →
104 →

Tc

Lc

114
110
120
118
112

## FIG. 1B

FIG. 2A

CD

MD

112

## FIG. 2B

CD

MD

112

## FIG. 2C

108'

102

A

112

106

## FIG. 2D

METHOD OF FORMING A MULTILAYER BATT
300

FORMING / PROVIDING A CARDED WEB OF STAPLE FIBERS
310

PLACING A PLURALITY OF CONTINUOUS FILAMENT FIBERS ONTO A SURFACE OF THE CARDED WEB, ALONG A MACHINE DIRECTION OF THE CARDED WEB TO FORM A COMPOSITE
320

FOLDING THE CARDED WEB AND CONTINUOUS FILAMENT FIBER COMPOSITE TO FORM A PLURALITY OF LAYERS, OPTIONALLY AT AN ANGLE OF 1 TO 45 DEGREES
330

NEEDLEPUNCHING THE PLURALITY OF LAYERS TO ENTANGLE AT LEAST SOME OF THE STAPLE FIBERS WITH THE CONTINUOUS FILAMENT FIBERS, SO THE ENTANGLED FIBERS EXTEND ALONG A Z-DIRECTION OF THE RESULTING BATT
340

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1175524 A1

- US 2010081354 A1